# EUROPÄISCHE PATENTSCHRIFT

(11) **EP 3 810 838 B1**
(45) Veröffentlichungstag und Bekanntmachung des Hinweises auf die Patenterteilung: **11.05.2022**
(21) Anmeldenummer: 19725980.7
(22) Anmeldetag: 21.05.2019
(51) Int. Cl.: D03D 15/00, B28B 1/52, D21F 1/00

(54) **BESPANNUNG FÜR EINE MASCHINE ZUR HERSTELLUNG VON FASERZEMENT-BAUTEILEN UND HERSTELLVERFAHREN FÜR EINE SOLCHE BESPANNUNG**
COVERING FOR A MACHINE FOR PRODUCING FIBRE-CEMENT COMPONENTS AND PRODUCTION METHOD FOR A COVERING OF THIS TYPE
TOILE POUR UNE MACHINE POUR LA FABRICATION DE COMPOSANT EN FIBRES-CIMENT ET PROCÉDÉ DE FABRICATION POUR UNE TELLE TOILE

(30) Priorität: 21.06.2018 US 201862687918 P
(43) Veröffentlichungstag der Anmeldung: 28.04.2021
(73) Patentinhaber: Voith Patent GmbH, 89522 Heidenheim (DE)
(72) Erfinder: KÖCKRITZ, Uwe, 89522 Heidenheim (DE); CROOK, Bob, Garner, North Carolina 27529 (US)
(74) Vertreter: Voith Patent GmbH - Patentabteilung
(86) Internationale Anmeldenummer: PCT/EP2019/063025
(87) Internationale Veröffentlichungsnummer: WO 2019/242961

(56) Entgegenhaltungen:
- DE-A1- 4 229 546
- US-A1- 2007 155 272

## Beschreibung

Die Erfindung betrifft nach einem ersten Aspekt eine Bespannung für eine Maschine zur Herstellung von Faserzement-Bauteilen mit einem MD-Garne und CD-Garne umfassenden Grundgewebe, wobei wenigstens einige der MD-Garne aus ersten Multifilamenten aus einem ersten Material und aus damit verzwirnten zweiten Multifilamenten aus einem zweiten Material gebildet sind, wobei das erste Material eine höhere Zugfestigkeit und eine höherer Schmelztemperatur als das zweite Material aufweist. Gemäß einem weiteren Aspekt betrifft die vorliegende Erfindung ein Herstellverfahren für eine solche Bespannung.

Eine derartige Bespannung ist aus der Druckschrift US 2007/0155272 A1 bekannt, deren Inhalt hiermit vollumfänglich in die vorliegende Anmeldung aufgenommen wird. Insbesondere wird Bezug genommen auf die in der US 2007/0155272 A1 beschriebenen Herstellverfahren von Faserzement-Bauteilen, vor allem auf das Hatschek-Verfahren, sowie auf den generellen Aufbau von Bespannungen, insbesondere von so genannten Faserzement-Filzen, die für diese Herstellverfahren typischer Weise verwendet werden. Der Vollständigkeit halber sei zudem auch noch auf die Druckschrift DE 42 29 546 A1 hingewiesen.

Konkret lehrt die US 2007/0155272 A1, als MD-Garne eines Grundgewebes für die Bespannung, d.h. als Garne, die sich in Maschinenrichtung der fertigen Bespannung erstrecken, teilweise Garne zu verwenden, die streckresistent sind. Als "streckresistent" werden dabei in der US 2007/0155272 A1 Garne bezeichnet, deren Material eine geringe Bruchdehnung aufweist, nämlich zum Beispiel eine Bruchdehnung von 1 bis 4% bei einer Feinheitsfestigkeit von etwa 150 cN/tex des Garns oder eine Bruchdehnung von 5 bis 7% bei einer Feinheitsfestigkeit von etwa 80 cN/tex des verzwirnten Materials. Zu den streckresistenten Materialien werden in der US 2007/0155272 A1 zum Beispiel aromatisch Polyamide, wie Aramide, Polyphenylensulfid (PPS), Polyparaphenylen und Kevlar^{®} gezählt. Einige oder alle MD-Garne können auch teilweise aus einem solchen streckresistenten Material und teilweise aus nicht-streckresistenten Materialien gebildet sein. Zu letzteren werden in der US 2007/0155272 A1 insbesondere die Polyamide gezählt.

Zwar erlaubt die Verwendung solcher streckresistenten Materialien als MD-Garne in der Bespannung die hohen Kräfte, die im Betrieb einer Maschine zur Herstellung von Faserzement-Bauteilen auf die Bespannung wirken, zuverlässig aufzunehmen, ohne dass sich die Bespannung unzulässig dehnt, jedoch sind diese Materialien und somit die daraus hergestellten Garne sehr teuer.

Es ist daher Aufgabe der vorliegenden Erfindung, eine Bespannung für eine Maschine zur Herstellung von Faserzement-Bauteilen bereitzustellen, welche kostengünstiger als die in der US 2007/0155272 A1 beschriebene Bespannung hergestellt werden kann, trotzdem aber nur akzeptable Dehnungen zulässt.

Diese Aufgabe wird durch die Merkmale der unabhängigen Ansprüche gelöst. Die abhängigen Ansprüche geben vorteilhafte Weiterbildungen der Erfindung wieder.

Gemäß einem ersten Aspekt der vorliegenden Erfindung zeichnet sich die eingangs beschriebene, gattungsgemäße Bespannung dadurch aus, dass die MD-Garne bei einer Temperatur wärmebehandelt sind, die zwischen der Schmelztemperatur des zweiten Materials und der Schmelztemperatur des ersten Materials liegt, so dass das zumindest teilweise aufgeschmolzene zweite Material nach dem Abkühlen eine Matrix bildet, in der die ersten Multifilamente aus dem ersten Material eingebettet sind. Auf diese Weise wird ein Verbundwerkstoff geschaffen, der es erlaubt, auch mit weniger kostspieligen Materialien als jene, die in der US 2007/0155272 A1 als streckresistente Materialien beschriebenen sind, Garne herzustellen, die eine hohe Zugfestigkeit und eine geringe Bruchdehnung aufweisen. Bei der Wärmebehandlung kann das zweite Material vollständig aufgeschmolzen worden sein. Dies ist jedoch nicht unbedingt zwingend; es reicht aus, dass es nur teilweise aufgeschmolzen wird, solange es nach dem Abkühlen und Erstarren zumindest teilweise einen Verbund zwischen den nicht angeschmolzenen Multifilamenten aus dem ersten Material schaffen kann.

Vorzugsweise sind die MD-Garne in einem zweistufigen Zwirnverfahren hergestellt, wobei zunächst erste Multifilamente und zweite Multifilamente in einer ersten Drehrichtung miteinander vorverzwirnt worden sind und anschließend mehrere der auf diese Weise entstandenen Vorzwirne in einer zweiten, der ersten entgegengesetzten Drehrichtung miteinander endverzwirnt worden sind. Durch das Verzwirnen steigt allgemein die Zug- bzw. Reißfestigkeit der daraus gebildeten Garne. Durch das zweistufige Verfahren kann dieser Effekt sogar noch weiter gesteigert werden. Indem bereits der Vorzwirn erste und zweite Multifilamente umfasst, kann sichergestellt werden, dass aufgeschmolzenes Material aus den zweiten Multifilamenten zuverlässig zu den ersten Multifilamenten gelangen kann, um diese miteinander zu verbinden.

Obwohl das Verzwirnen den Vorteil hat, dass die Zug- bzw. Reißfestigkeit der daraus gebildeten Garne erhöht wird, hat es sich in Versuchen herausgestellt, dass es im Hinblick auf die Dehnung der MD-Garne und der daraus gebildeten Bespannung von Vorteil ist, wenn der Grad an Verzwirnung sehr gering gehalten wird. Deshalb wird vorgeschlagen, dass die erste Stufe des Zwirnverfahrens mit nicht mehr als 236,22 Umdrehungen pro Meter (=6,0tpi), vorzugsweise nicht mehr als 196,85 Umdrehungen pro Meter (=5,0tpi), weiter bevorzugt mit nicht mehr als 157,48 Umdrehungen pro Meter (=4,0tpi) erfolgt bzw. erfolgt ist und/oder dass die zweite Stufe des Zwirnverfahrens mit nicht mehr als 118,11 Umdrehungen pro Meter (=3,0tpi), weiter bevorzugt nicht mehr als 98,43 Umdrehungen pro Meter (=2,5tpi), noch weiter bevorzugt nicht mehr als 78,74 Umdrehungen pro Meter (=2,0tpi) erfolgt bzw. erfolgt ist. Die einem Fachmann auf dem Gebiet der Bespannungen und der Webtechnik bekannte Einheit "tpi" steht dabei für "twists per inch" oder "turns per inch", also Umdrehungen pro Zoll, was sich in Umdrehungen pro Meter umrechnen lässt.

Die Feinheit der Fäden der ersten Multifilamente und/oder der zweiten Multifilamente kann so gewählt sein, dass sie nicht mehr als 2400tex, vorzugsweise nicht mehr als 2300tex, weiter bevorzugt nicht mehr als 2200tex beträgt. Die Maßeinheit "tex" steht dabei für das Fadengewicht pro Länge. Gemäß ISO 1144 und DIN 60905 entspricht 1tex dem Gewicht in Gramm, welches ein Faden mit einer Länge von 1000 Metern aufweist. Je feiner die Multifilamente im Ausgangsmaterial für die MD-Garne sind, desto größer die Zugbelastung, die die aus diesen Multifilamenten hergestellten MD-Garne aushalten können. Zum einen können nämlich feinere Multifilamente höher verstreckt werden als dickere Multifilamente, was sich positiv auf die Zugfestigkeit des Materials auswirkt, und zum anderen kann bei im Wesentlichen identischen Außenumfang des MD-Garns die effektiv nutzbare Querschnittfläche für die Übertragung von Zugkräften bei der Verwendung feinerer Multifilamente gegenüber weniger und dickerer Multifilamente vergrößert werden.

Akzeptable Ergebnisse hinsichtlich der Dehnung der MD-Garne bei gleichzeitig geringen Materialkosten kann man insbesondere erzielen, wenn das erste Material Polyamid (PA) und das zweite Material Polypropylen (PP) ist. Während in der Druckschrift US 2007/0155272 A1 Polyamide explizit zu den nicht-streckresistenten Materialien gezählt werden, kann dieses verhältnismäßig kostengünstige Material gemäß der vorliegenden Erfindung als erstes Material verwendet werden, also als das Material, dass in dem Verbundwerkstoff die höhere Zugfestigkeit und höhere Schmelztemperatur aufweist. Polypropylen (PP) schmilzt typischer Weise bei einer Temperatur zwischen 160°C und 165°C, wohingegen Polyamide (PA) wesentlich höhere Schmelztemperaturen aufweisen können. Zum Beispiel liegt die Schmelztemperatur von PA6.6 bei rund 260°C. Insofern kann für den Schritt der Wärmebehandlung zum Beispiel eine Temperatur im Bereich von 185°C bis 190°C gewählt werden.

Diejenigen MD-Garne in der Grundstruktur der Bespannung, die aus ersten und zweiten Multifilamenten gebildet sind, können dabei einen Anteil von 10 Gew.-% bis 30 Gew.-%, vorzugsweise von 15 Gew.-% bis 25 Gew.-%, an dem ersten Material aufweisen. Sofern alle Multifilamente eines solchen MD-Garns, insbesondere sowohl die ersten Multifilamente als auch die zweiten Multifilamente, dieselbe Feinheit (gemessen in tex) aufweisen, korrespondiert die prozentuale Gewichtsangabe mit der prozentualen Anzahl der Einzelfäden der ersten Multifilamente zu der Gesamtanzahl an Einzelfäden im Ausgangsmaterial des MD-Garns.

Die im Grundgewebe mit den MD-Garnen verwobenen CD-Garne können Monofilamente sein.

Vorzugsweise ist das Grundgewebe ein doppellagiges Gewebe, welches zwei Systeme von MD-Garnen und ein System von CD-Garnen umfasst. So können anstelle eines MD-Garns mit einem relativ großen Durchmesser zum Beispiel vier MD-Garne mit einem wesentlich kleineren Durchmesser verwendet werden, wobei jeweils zwei MD-Garne paarweise übereinander im Gewebe angeordnet sein können. Auf diese Weise lässt sich eine gleichmäßigere Entwässerung durch die Bespannung hindurch erzielen.

So wie dies bereits in der Druckschrift US 2007/0155272 A1 beschrieben ist, kann auf der den zu fertigenden Faserzement-Bauteilen zugewandten Seite des Grundgewebes ein weiteres Gewebe angeordnet sein, dessen CD-Garne einen kleineren Durchmesser als die CD-Garne des Grundgewebes aufweisen und/oder dessen MD-Garne einen kleineren Durchmesser als die MD-Garne des Grundgewebes aufweisen. Hierdurch können die hohen Zugkräfte, die im Betrieb der Maschine zur Herstellung von Faserzement-Bauteilen wirken, primär von dem Grundgewebe aufgenommen werden, während das weitere Gewebe die Funktion hat, eine feinere Oberfläche für die zu fertigenden Faserzement-Bauteile bereitzustellen, durch welche hindurch eine gleichmäßigere Entwässerung erfolgen kann. Das weitere Gewebe kann eine höhere Dichte von CD-Garnen und/oder MD-Garnen aufweisen im Vergleich zu dem Grundgewebe. Hierdurch wird das Risiko von Markierungen weiter reduziert.

Um die Wasser-Aufnahmefähigkeit der Bespannung zu erhöhen, kann diese auf einer Außenseite oder auf beiden Außenseiten mit einer Lage von Stapelfasern versehen sein. Als "Außenseite" ist dabei im Sinne der vorliegenden Erfindung die den zu fertigenden Faserzement-Bauteilen zugewandte Seite der Bespannung bzw. die dieser Seite gegenüberliegende, den zu fertigenden Faserzement-Bauteilen abgewandte Seite zu Bespannung zu verstehen. Die Befestigung an dem Grundgewebe kann zum Beispiel durch Vernadeln erfolgen.

Ein weiterer Aspekt der vorliegenden Erfindung betrifft ein Herstellverfahren für die zuvor beschriebene Bespannung, wobei die Vorteile, die im Hinblick auf die Bespannung als solche beschrieben wurden, auch für das erfindungsgemäße Verfahren zutreffen und *vice versa.*

Somit betrifft die vorliegende Erfindung auch ein Verfahren zur Herstellung einer Bespannung, die im bestimmungsgemäßen Einsatz in einer Maschine zur Herstellung von Faserzement-Bauteilen verwendet wird und die ein Grundgewebe mit MD-Garnen und CD-Garnen aufweist, wobei das Verfahren die folgenden Schritte umfasst: Verzwirnen von ersten Multifilamenten aus einem ersten Material und zweiten Multifilamenten aus einem zweiten Material, um wenigstens einige der MD-Garne zu bilden, wobei das erste Material eine höhere Zugfestigkeit und eine höherer Schmelztemperatur als das zweite Material aufweist; und Wärmebehandeln der MD-Garne bei einer Temperatur, die zwischen der Schmelztemperatur des zweiten Materials und der Schmelztemperatur des ersten Materials liegt, so dass das zumindest teilweise aufgeschmolzene zweite Material nach dem Abkühlen eine Matrix bildet, in der die zweiten Multifilamente aus dem zweiten Material eingebettet sind.

Vorzugsweise werden vor dem Schritt der Wärmebehandlung die MD-Garne mit CD-Garnen zur Erstellung des Grundgewebes verwoben. Auf diese Weise kann ein Verfahrensschritt gespart werden, da eine Wärmebehandlung des gewobenen Grundgewebes in der Regel ohnehin durchgeführt wird, um die beim Weben entstehenden Kröpfungen zwischen MD-Garnen und CD-Garnen zu fixieren und somit einer späteren Dehnung entgegenzuwirken. Gemäß der vorliegenden Erfindung ist es jedoch von Bedeutung, die Temperatur für die Wärmebehandlung so zu wählen, dass sie zwischen der Schmelztemperatur des zweiten Materials und der Schmelztemperatur des ersten Materials liegt. Es ist möglich, den Schritt der Wärmebehandlung nur an dem Grundgewebe vorzunehmen oder aber an der ansonsten bereits im Wesentlichen fertig hergestellten Bespannung, also nachdem das Grundgewebe mit einem etwaigen weiteren Gewebe und einer oder mehreren Stapelfaserschichten versehen worden ist.

Vorzugsweise umfasst der Schritt des Verzwirnens zwei Teilschritte, nämlich: Vorverzwirnen von ersten Multifilamenten mit zweiten Multifilamenten in einer ersten Drehrichtung und Endverzwirnen mehrerer auf diese Weise entstandener Vorzwirne in einer zweiten, der ersten entgegengesetzten Drehrichtung. Die beiden entgegengesetzten Drehrichtungen werden üblicher Weise auch als S-Richtung bzw. Z-Richtung beschrieben. Der Grad der Verzwirnung wird dabei vorzugsweise aus den zuvor beschriebenen Gründen gering gewählt.

Die Erfindung wird nachfolgend anhand von schematischen und nicht maßstabsgetreuen Zeichnungen weiter erläutert. Es zeigen:
- Figur 1: eine Querschnittsansicht durch einen Abschnitt der erfindungsgemäßen Bespannung vor dem Schritt der Wärmebehandlung;
- Figur 2: einen vergrößerten Abschnitt eines erste und zweite Multifilamente umfassenden Vorzwirns;
- Figur 3: eine Querschnittsansicht wie in Figur 1, jedoch nach dem Schritt der Wärmebehandlung.

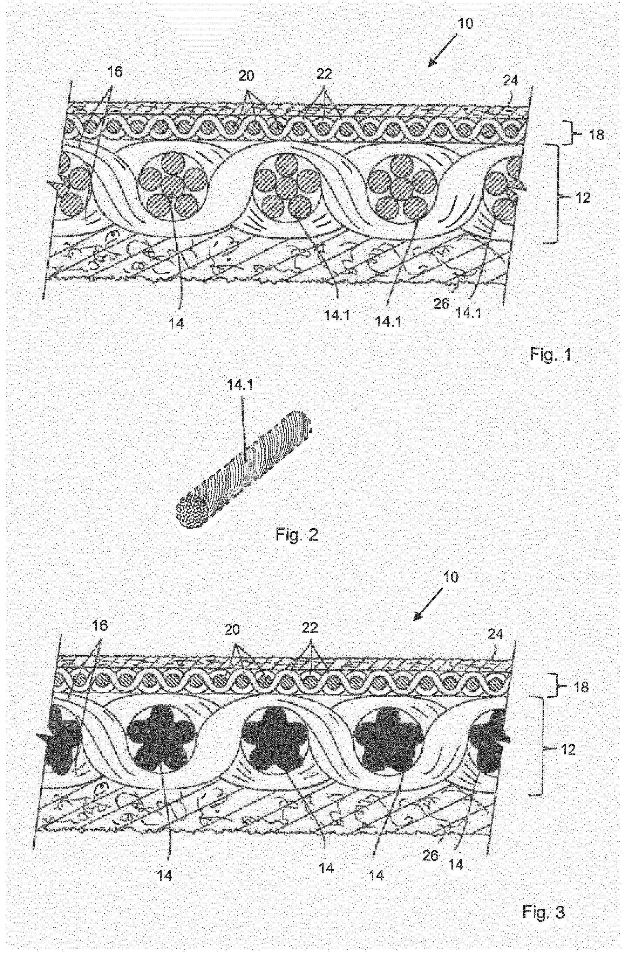

Figur 1 zeigt eine schematische Querschnittsansicht durch einen Abschnitt der erfindungsgemäßen Bespannung 10 für eine Maschine zur Herstellung von Faserzement-Bauteilen vor dem Schritt der Wärmebehandlung. Wesentlicher Bestandteil der Bespannung 10 ist ein Grundgewebe 12, welches aus miteinander verwobenen MD-Garnen 14 und CD-Garnen 16 gebildet ist. Unter MD-Garnen 14 sind dabei Garne zu verstehen, die sich im Wesentlichen in Maschinenrichtung der Bespannung 10 erstrecken, d.h. in Laufrichtung der Bespannung 10 bei bestimmungsgemäßer Verwendung. Unter CD-Garnen 16 sind hingegen Garne zu verstehen, die sich im Wesentlichen in Maschinenquerrichtung der Bespannung 10 erstrecken, d.h. quer zur Laufrichtung der Bespannung 10 bei bestimmungsgemäßer Verwendung. Das Grundgewebe 12 kann wahlweise rund oder flach gewoben sein. Im letzteren Fall werden Längsenden des Grundgewebes 12 in einem Nahtbereich miteinander verbunden, um das Grundgewebe 12 endlos zu machen. Dabei entsprechen die MD-Garne 14 den Kettfäden und die CD-Garne 16 den Schussfäden auf dem Webstuhl.

Wie in Figur 1 gut zu erkennen ist, bestehen die MD-Garne 14 jeweils aus einer Mehrzahl von Vorzwirnen 14.1. In dem vorliegenden Ausführungsbeispiel sind pro MD-Garn 14 jeweils sechs Vorzwirne 14.1 gezeigt. Allerdings können die MD-Garne 14 auch eine andere Anzahl an Vorzwirnen 14.1 umfassen, insbesondere weniger Vorzwirne 14.1, wie zum Beispiel fünf oder sogar nur vier Vorzwirne 14.1. Wie in Figur 2 angedeutet besteht jeder Vorzwirn 14.1 aus Bündeln von ersten Multifilamenten und zweiten Multifilamenten, die miteinander zur Bildung des Vorzwirns 14.1 verzwirnt sind. Vorzugsweise sind die einzelnen Bündel in sich auch bereits verzwirnt, um diese leichter in der Fertigung handhaben zu können.

Allerdings sollte auch hier bevorzugt eine geringe Zwirnrate vorliegen. Das Material der ersten Multifilamente unterscheidet sich von dem Material der zweiten Multifilamente insbesondere dadurch, dass es eine höhere Zugfestigkeit und eine höhere Schmelztemperatur aufweist. In dem vorliegenden Ausführungsbeispiel ist das erste Material Polyamid (PA) und das zweite Material Polypropylen (PP).

Zunächst werden die ersten Multifilamente und die zweiten Multifilamente zur Bildung der Vorzwirne 14.1 in einer ersten Drehrichtung miteinander verzwirnt. Vorzugsweise erfolgt dieser Schritt mit einer verhältnismäßig geringen Zwirnrate von nicht mehr als 236,22 Umdrehungen pro Meter (=6,0tpi). Anschließend werden die so gebildeten Vorzwirne 14.1 in einer zweiten, der ersten Drehrichtung entgegengesetzten Drehrichtung zur Bildung des MD-Garns 14 miteinander endverzwirnt. Vorzugsweise erfolgt dieser Schritt gegenüber dem ersten Schritt mit einer noch geringeren Zwirnrate von nicht mehr als 118,11 Umdrehungen pro Meter (=3,0tpi). Die geringen Zwirnraten verhindern eine übermäßige Dehnung der MD-Garne 14, wenn diese auf Zug belastet werden. Zwar erhöht das Verzwirnen die Reißfestigkeit der MD-Garne, weshalb die Zwirnrate nicht Null sein sollte, jedoch ist eine zu große Zwirnrate negativ hinsichtlich des Dehnverhaltens des MD-Garns.

In einem konkreten Ausführungsbeispiel können die MD-Garne 14 des Grundgewebes 12 hergestellt werden bzw. sein, indem vier Bündel von zweiten Multifilamenten á 630 Einzelfasern aus Polyamid (PA) und ein Bündel von ersten Multifilamenten á 600 Einzelfasern aus Polypropylen (PP) zu einen Vorzwirn 14.1 mit einer Zwirnrate von 196,85 Umdrehungen pro Meter (=5,0tpi) in einer ersten Drehrichtung miteinander verzwirnt werden und dann fünf solcher Vorzwirne 14.1 in einer zweiten, der ersten Drehrichtung entgegengesetzten Drehrichtung mit einer Zwirnrate von 98,43 Umdrehungen pro Meter (=2,5tpi) miteinander verzwirnt werden. In diesem Ausführungsbeispiel können alle Einzelfäden der ersten und zweiten Multifilamente eine Feinheit von 1991tex aufweisen.

In einem weiteren konkreten Ausführungsbeispiel können die MD-Garne 14 des Grundgewebes 12 alternativ hergestellt werden bzw. sein, indem drei Bündel von zweiten Multifilamenten á 1260 Einzelfasern aus Polyamid (PA) und ein Bündel von ersten Multifilamenten á 600 Einzelfasern aus Polypropylen (PP) zu einen Vorzwirn 14.1 mit einer Zwirnrate von 128,74 Umdrehungen pro Meter (=3,27tpi) in einer ersten Drehrichtung miteinander verzwirnt werden und dann vier solcher Vorzwirne 14.1 in einer zweiten, der ersten Drehrichtung entgegengesetzten Drehrichtung mit einer Zwirnrate von 70,87 Umdrehungen pro Meter (=1,8tpi) miteinander verzwirnt werden. In diesem Ausführungsbeispiel können alle Einzelfäden der ersten und zweiten Multifilamente eine Feinheit von 2103tex aufweisen.

In einem noch weiteren konkreten Ausführungsbeispiel können die MD-Garne 14 des Grundgewebes 12 alternativ hergestellt werden bzw. sein, indem zwei Bündel von zweiten Multifilamenten á 1890 Einzelfasern aus Polyamid (PA) und ein Bündel von ersten Multifilamenten á 846 Einzelfasern aus Polypropylen (PP) zu einen Vorzwirn 14.1 mit einer Zwirnrate von 149,61 Umdrehungen pro Meter (=3,8tpi) in einer ersten Drehrichtung miteinander verzwirnt werden und dann vier solcher Vorzwirne 14.1 in einer zweiten, der ersten Drehrichtung entgegengesetzten Drehrichtung mit einer Zwirnrate von 90,55 Umdrehungen pro Meter (=2,3tpi) miteinander verzwirnt werden. In diesem Ausführungsbeispiel können alle Einzelfäden der ersten und zweiten Multifilamente eine Feinheit von 2167tex aufweisen.

In Figur 1 ist das Grundgewebe 12 zwar als einlagiges Gewebe dargestellt, doch kann es auch ein doppellagiges Gewebe sein. Hinsichtlich der Entwässerung hat es sich in Versuchen als besonders vorteilhaft erwiesen, wenn das Grundgewebe 12 ein doppellagiges Gewebe mit ein zwei System von MD-Garnen 13 und einem System von CD-Garnen 16 ist.

Wie in Figur 1 weiterhin zu erkennen ist, kann die Bespannung 10 ferner ein weiteres Gewebe 18 umfassen. Auch dieses Gewebe besteht aus miteinander, vorzugsweise durch Leinwandbindung, verwobenen MD-Garnen 20 und CD-Garnen 22. Die MD-Garne 20 und die CD-Garne 22 des weiteren Gewebes weisen jedoch einen merklich kleineren Durchmesser als die MD-Garne 14 und CD-Garne 16 des Grundgewebes auf. Die Hauptfunktion des weiteren Gewebes 18 besteht darin, die sich auf ihr bildenden Faserzement-Bauteile möglichst flächig zu unterstützen und für eine möglichst gleichmäßige Entwässerung zu sorgen. Auf der den zu bildenden Faserzement-Bauteilen zugewandte Außenseite der Bespannung 10 (oben in Figur 1) kann zudem noch eine obere Lage von Stapelfasern 24 angeordnet sein. Ebenso kann an der den zu bildenden Faserzement-Bauteilen abgewandte Außenseite der Bespannung 10 (unten in Figur 1) eine untere Lage von Stapelfasern 26 angeordnet sein. Die beiden Lagen von Stapelfasern 24, 26 können zum Beispiel durch Vernadeln mit dem Grundgewebe 12 und/oder dem weiteren Gewebe 18 verbunden sein. Sie dienen dazu, die Entwässerung im Herstellungsprozess der Faserzement-Bauteile zu unterstützen.

Figur 3 zeigt dieselbe schematisch Querschnittsansicht wie Figur 1, jedoch mit dem Unterschied, dass bei dieser Ansicht die Wärmebehandlung der MD-Garne 14 des Grundgewebes 12 bereits erfolgt ist. Dabei wurde die Wärmebehandlung bei einer Temperatur durchgeführt, die über der Schmelztemperatur des zweiten Materials der zweiten Multifilamente liegt, d.h. über der Schmelztemperatur von Polypropylen (PP), jedoch unter der Schmelztemperatur des ersten Materials der ersten Multifilamente, d.h. unter der Schmelztemperatur von Polyamid (PA). So kann die Wärmebehandlung zum Beispiel bei einer Temperatur von 190°C durchgeführt worden sein. Dies hat zur Folge, dass das zweite Material zumindest teilweise aufschmilzt und dann beim Erstarren eine Matrix bildet, in der die ersten Multifilamente aus dem ersten Material, welches nicht aufgeschmolzen ist, eingebettet sind. Somit wird ein Verbundwerkstoff erzielt, der trotz der Verwendung von relativ günstigen Ausgangsmaterialien nur relativ geringe Dehnungen zulässt. Der Begriff "eine Matrix bilden" ist in diesem Zusammenhang breit zu verstehen. Es kann natürlich sein, dass die ersten Multifilamente vollständig von dem aufgeschmolzenen zweiten Material umschlossen werden. Jedoch ist dies nicht zwingend notwendig. Es reicht in der Regel aus, wenn das zweite Material im Schritt der Wärmebehandlung so weich wird, dass er als Kleber wirkt, um die ersten Multifilamente zumindest teilweise miteinander zu verbinden.

### Bezugszeichenliste:

- 10: Bespannung
- 12: Grundgewebe
- 14: MD-Garn (des Grundgewebes)
- 14.1: Vorzwirn
- 16: CD-Garn (des Grundgewebes)
- 18: weiteres Gewebe
- 20: MD-Garn (des weiteren Gewebes)
- 22: CD-Garn (des weiteren Gewebes)
- 24: obere Lage von Stapelfasern
- 26: untere Lage von Stapelfasern

## Patentansprüche

1. Bespannung (10) für eine Maschine zur Herstellung von Faserzement-Bauteilen mit einem MD-Garne (14) und CD-Garne (16) umfassenden Grundgewebe (12), wobei wenigstens einige der MD-Garne (14) aus ersten Multifilamenten aus einem ersten Material und aus damit verzwirnten zweiten Multifilamenten aus einem zweiten Material gebildet sind, wobei das erste Material eine höhere Zugfestigkeit und eine höherer Schmelztemperatur als das zweite Material aufweist,
**dadurch gekennzeichnet, dass** die MD-Garne (14) bei einer Temperatur wärmebehandelt sind, die zwischen der Schmelztemperatur des zweiten Materials und der Schmelztemperatur des ersten Materials liegt, so dass das zumindest teilweise aufgeschmolzene zweite Material nach dem Abkühlen eine Matrix bildet, in der die ersten Multifilamente aus dem ersten Material eingebettet sind.

2. Bespannung (10) nach Anspruch 1, **dadurch gekennzeichnet, dass** die MD-Garne (14) in einem zweistufigen Zwirnverfahren hergestellt sind, wobei zunächst erste Multifilamente und zweite Multifilamente in einer ersten Drehrichtung miteinander vorverzwirnt worden sind und anschließend mehrere der auf diese Weise entstandenen Vorzwirne (14.1) in einer zweiten, der ersten entgegengesetzten Drehrichtung miteinander endverzwirnt worden sind.

3. Bespannung (10) nach Anspruch 2, **dadurch gekennzeichnet, dass** die erste Stufe des Zwirnverfahrens mit nicht mehr als 236,22 Umdrehungen pro Meter (=6,0tpi), vorzugsweise nicht mehr als 196,85 Umdrehungen pro Meter (=5,0tpi), weiter bevorzugt mit nicht mehr als 157,48 Umdrehungen pro Meter (=4,0tpi) erfolgt ist und/oder dass die zweite Stufe des Zwirnverfahrens mit nicht mehr als 118,11 Umdrehungen pro Meter (=3,0tpi), weiter bevorzugt nicht mehr als 98,43 Umdrehungen pro Meter (=2,5tpi), noch weiter bevorzugt nicht mehr als 78,74 Umdrehungen pro Meter (=2,0tpi) erfolgt ist.

4. Bespannung (10) nach einem der vorhergehenden Ansprüche, **dadurch gekennzeichnet, dass** die Feinheit der Fäden der ersten Multifilamente und/oder der zweiten Multifilamente nicht mehr als 2400tex, vorzugsweise nicht mehr als 2300tex, weiter bevorzugt nicht mehr als 2200tex beträgt.

5. Bespannung (10) nach einem der vorhergehenden Ansprüche, **dadurch gekennzeichnet, dass** das erste Material Polyamid (PA) und das zweite Material Polypropylen (PP) ist.

6. Bespannung (10) nach einem der vorhergehenden Ansprüche, **dadurch gekennzeichnet, dass** die MD-Garne (14), die aus ersten und zweiten Multifilamenten gebildet sind, einen Anteil von 10 Gew.-% bis 30 Gew.-%, vorzugsweise von 15 Gew.-% bis 25 Gew.-%, an dem ersten Material aufweisen.

7. Bespannung (10) nach einem der vorhergehenden Ansprüche, **dadurch gekennzeichnet, dass** die im Grundgewebe (12) mit den MD-Garnen (14) verwobenen CD-Garne (16) Monofilamente sind.

8. Bespannung (10) nach einem der vorhergehenden Ansprüche, **dadurch gekennzeichnet, dass** das Grundgewebe (12) ein doppellagiges Gewebe ist, welches zwei Systeme von MD-Garnen (14) und ein System von CD-Garnen (16) umfasst.

9. Bespannung (10) nach einem der vorhergehenden Ansprüche, **dadurch gekennzeichnet, dass** auf der den zu fertigenden Faserzement-Bauteilen zugewandten Seite des Grundgewebes (12) ein weiteres Gewebe (18) angeordnet ist, dessen CD-Garne (22) einen kleineren Durchmesser als die CD-Garne (16) des Grundgewebes (12) aufweisen und/oder dessen MD-Garne (20) einen kleineren Durchmesser als die MD-Garne (14) des Grundgewebes (12) aufweisen.

10. Bespannung (10) nach einem der vorhergehenden Ansprüche, **dadurch gekennzeichnet, dass** die Bespannung (10) auf einer Außenseite oder auf beiden Außenseiten mit einer Lage von Stapelfasern (24, 26) versehen ist.

11. Verfahren zur Herstellung einer Bespannung (10), die im bestimmungsgemäßen Einsatz in einer Maschine zur Herstellung von Faserzement-Bauteilen verwendet wird und die ein Grundgewebe (12) mit MD-Garnen (14) und CD-Garnen (16) aufweist, wobei das Verfahren die folgenden Schritte umfasst:
- Verzwirnen von ersten Multifilamenten aus einem ersten Material und zweiten Multifilamenten aus einem zweiten Material, um wenigstens einige der MD-Garne (14) zu bilden, wobei das erste Material eine höhere Zugfestigkeit und eine höherer Schmelztemperatur als das zweite Material aufweist,
- Wärmebehandeln der MD-Garne (14) bei einer Temperatur, die zwischen der Schmelztemperatur des zweiten Materials und der Schmelztemperatur des ersten Materials liegt, so dass das zumindest teilweise aufgeschmolzene zweite Material nach dem Abkühlen eine Matrix bildet, in der die ersten Multifilamente aus dem ersten Material eingebettet sind.

12. Verfahren nach Anspruch 11, **dadurch gekennzeichnet, dass** vor dem Schritt der Wärmebehandlung die MD-Garne (14) mit CD-Garnen (16) zur Erstellung des Grundgewebes (12) verwoben werden.

13. Verfahren nach Anspruch 11 oder 12, **dadurch gekennzeichnet, dass** der Schritt des Verzwirnens zwei Teilschritte umfasst, nämlich:
- Vorverzwirnen von ersten Multifilamenten mit zweiten Multifilamenten in einer ersten Drehrichtung und
- Endverzwirnen mehrerer auf diese Weise entstandener Vorzwirne (14.1) in einer zweiten, der ersten entgegengesetzten Drehrichtung.

## Claims

1. Clothing (10) for a machine for producing fiber cement components, having a base fabric (12) comprising MD yarns (14) and CD yarns (16), wherein at least some of the MD yarns (14) are formed from first multifilaments composed of a first material and from second multifilaments which are twisted therewith and which are composed of a second material, wherein the first material has a higher tensile strength and a higher melting temperature than the second material, **characterized in that** the MD yarns (14) are heat-treated at a temperature which lies between the melting temperature of the second material and the melting temperature of the first material, such that, after cooling, the at least partially melted second material forms a matrix in which the first multifilaments composed of the first material are embedded.

2. Clothing (10) according to Claim 1, **characterized in that** the MD yarns (14) are produced in a two-stage twisting process, wherein first multifilaments and second multifilaments have initially been subjected to pre-twisting with one another in a first direction of rotation, and subsequently a plurality of the pre-twisted yarns (14.1) produced in this way have been subjected to final twisting with one another in a second direction of rotation opposite to the first direction of rotation.

3. Clothing (10) according to Claim 2, **characterized in that** the first stage of the twisting process has been performed with not more than 236.22 revolutions per meter (=6.0 tpi), preferably not more than 196.85 revolutions per meter (=5.0 tpi), further preferably with not more than 157.48 revolutions per meter (=4.0 tpi), and/or **in that** the second stage of the twisting process has been performed with not more than 118.11 revolutions per meter (=3.0 tpi), further preferably not more than 98.43 revolutions per meter (=2.5 tpi), even more preferably not more than 78.74 revolutions per meter (=2.0 tpi).

4. Clothing (10) according to one of the preceding claims, **characterized in that** the fineness of the threads of the first multifilaments and/or of the second multifilaments is not more than 2400 tex, preferably not more than 2300 tex, further preferably not more than 2200 tex.

5. Clothing (10) according to one of the preceding claims, **characterized in that** the first material is polyamide (PA) and the second material is polypropylene (PP) .

6. Clothing (10) according to one of the preceding claims, **characterized in that** the MD yarns (14), which are formed from first and second multifilaments, have a proportion of 10% by weight to 30% by weight, preferably of 15% by weight to 25% by weight, of the first material.

7. Clothing (10) according to one of the preceding claims, **characterized in that** the CD yarns (16) interwoven with the MD yarns (14) in the base fabric (12) are monofilaments.

8. Clothing (10) according to one of the preceding claims, **characterized in that** the base fabric (12) is a double-ply fabric, which comprises two systems of MD yarns (14) and one system of CD yarns (16).

9. Clothing (10) according to one of the preceding claims, **characterized in that** a further fabric (18) whose CD yarns (22) have a smaller diameter than the CD yarns (16) of the base fabric (12) and/or whose MD yarns (20) have a smaller diameter than the MD yarns (14) of the base fabric (12) is arranged on that side of the base fabric (12) which faces the fiber cement components to be manufactured.

10. Clothing (10) according to one of the preceding claims, **characterized in that** a layer of staple fibers (24, 26) is provided on one outer side or on both outer sides of the clothing (10).

11. Method for producing a clothing (10) which, when used as intended, is used in a machine for producing fiber cement components and which has a base fabric (12) having MD yarns (14) and CD yarns (16), wherein the method comprises the following steps of:
- first multifilaments composed of a first material and second multifilaments composed of a second material being subjected to twisting in order to form at least some of the MD yarns (14), wherein the first material has a higher tensile strength and a higher melting temperature than the second material,
- heat-treating the MD yarns (14) at a temperature which lies between the melting temperature of the second material and the melting temperature of the first material, such that, after cooling, the at least partially melted second material forms a matrix in which the first multifilaments composed of the first material are embedded.

12. Method according to Claim 11, **characterized in that**, prior to the heat treatment step, the MD yarns (14) are interwoven with CD yarns (16) in order to create the base fabric (12).

13. Method according to Claim 11 or 12, **characterized in that** the twisting step comprises two sub-steps, specifically of:
- first multifilaments being subjected to pre-twisting with second multifilaments in a first direction of rotation, and
- a plurality of pre-twisted yarns (14.1) produced in this way being subjected to final twisting in a second direction of rotation opposite to the first direction of rotation.

## Revendications

1. Revêtement (10) destiné à une machine de production de composants en fibrociment comprenant un tissu de base (12) comprenant des fils MD (14) et des fils CD (16), au moins certains des fils MD (14) étant formés à partir de premiers multifilaments d'un premier matériau et de deuxièmes multifilaments d'un deuxième matériau torsadés avec les premiers, le premier matériau ayant une résistance à la traction plus élevée et un point de fusion plus élevé que le deuxième matériau,
**caractérisé en ce que** les fils MD (14) sont traités thermiquement à une température comprise entre la température de fusion du deuxième matériau et la température de fusion du premier matériau de sorte que le deuxième matériau, au moins partiellement fondu, forme après refroidissement une matrice dans laquelle sont incorporés les premiers multifilaments du premier matériau.

2. Revêtement (10) selon la revendication 1, **caractérisé en ce que** les fils MD (14) sont produits selon un procédé de retordage en deux étapes, des premiers multifilaments et des deuxièmes multifilaments étant d'abord prétordus les uns avec les autres dans un premier sens de torsion puis plusieurs des pré-retors (14.1) ainsi réalisés ont été soumis à un retordage final dans un deuxième sens de torsion opposé au premier.

3. Revêtement (10) selon la revendication 2, **caractérisé en ce que** la première étape du procédé de retordage est effectuée avec pas plus de 236,22 tours par mètre (=6,0 tpi), de préférence pas plus de 196,85 tours par mètre (=5,0 tpi), plus préférablement avec pas plus de 157,48 tours par mètre (=4,0 tpi) et/ou **en ce que** la deuxième étape du procédé de retordage est effectuée avec pas plus de 118,11 tours par mètre (=3,0 tpi), plus préférablement pas plus de 98,43 tours par mètre (=2,5 tpi), encore plus préférablement pas plus de 78,74 tours par mètre (=2,0 tpi).

4. Revêtement (10) selon l'une des revendications précédentes, **caractérisé en ce que** la finesse des fils des premiers multifilaments et/ou des deuxièmes multifilaments est d'au plus 2400 tex, de préférence d'au plus 2300 tex, plus préférablement d'au plus 2200 tex.

5. Revêtement (10) selon l'une des revendications précédentes, **caractérisé en ce que** le premier matériau est du polyamide (PA) et le deuxième matériau est du polypropylène (PP).

6. Revêtement (10) selon l'une des revendications précédentes, **caractérisé en ce que** les fils MD (14), sont formés à partir de premiers et deuxièmes multifilaments, à raison de 10 % en poids à 30 % en poids, de préférence de 15 % en poids à 25 % en poids, du premier matériau.

7. Revêtement (10) selon l'une des revendications précédentes, **caractérisé en ce que** les fils CD (16) entrelacés avec les fils MD (14) dans le tissu de base (12) sont des monofilaments.

8. Revêtement (10) selon l'une des revendications précédentes, **caractérisé en ce que** le tissu de base (12) est un tissu double couche comprenant deux systèmes de fils MD (14) et un système de fils CD (16).

9. Revêtement (10) selon l'une des revendications précédentes, **caractérisé en ce qu'**un autre tissu (18), dont les fils CD (22) ont un diamètre inférieur à celui des fils CD (16) du tissu de base (12) et/ou dont les fils MD (20) ont un diamètre inférieur à ceux des fils MD (14) du tissu de base (12), est disposé du côté du tissu de base (12) qui est dirigé vers les composants en fibrociment à fabriquer.

10. Revêtement (10) selon l'une des revendications précédentes, **caractérisé en ce que** le revêtement (10) est pourvu d'une couche de fibres discontinues (24, 26) sur un côté extérieur ou sur les deux côtés extérieurs.

11. Procédé de production d'un revêtement (10) qui est utilisé comme prévu dans une machine pour produire des composants en fibrociment et qui comporte un tissu de base (12) pourvu de fils MD (14) et de fils CD (16), le procédé comprenant les étapes suivantes :
- torsader des premiers multifilaments d'un premier matériau et des deuxièmes multifilaments d'un deuxième matériau pour former au moins certains des fils MD (14), le premier matériau ayant une résistance à la traction plus élevée et une température de fusion plus élevée que le deuxième matériau,
- traiter thermiquement les fils MD (14) à une température comprise entre la température de fusion du deuxième matériau et la température de fusion du premier matériau de sorte que le deuxième matériau, au moins partiellement fondu, forme après refroidissement une matrice dans laquelle sont incorporés les premiers multifilaments du premier matériau.

12. Procédé selon la revendication 11, **caractérisé en ce que**, avant l'étape de traitement thermique, les fils MD (14) sont tissés avec des fils CD (16) pour créer le tissu de base (12).

13. Procédé selon la revendication 11 ou 12, **caractérisé en ce que** l'étape de retordage comprend deux sous-étapes, à savoir :
- pré-retordre des premiers multifilaments avec des deuxièmes multifilaments dans un premier sens de torsion et
- effectuer un retordage final d'une pluralité de retors (14.1) ainsi réalisés dans un deuxième sens de torsion opposé au premier.
